(19) Europäisches Patentamt / European Patent Office / Office européen des brevets

(11) **EP 3 679 517 B1**

(12) **FASCICULE DE BREVET EUROPEEN**

(45) Date de publication et mention
de la délivrance du brevet:
**17.08.2022  Bulletin 2022/33**

(21) Numéro de dépôt: **18842777.7**

(22) Date de dépôt: **19.12.2018**

(51) Classification Internationale des Brevets (IPC):
*G06V 10/20* $^{(2022.01)}$      *G06V 10/42* $^{(2022.01)}$
*G06V 20/00* $^{(2022.01)}$     *G06V 20/64* $^{(2022.01)}$
*G06T 7/73* $^{(2017.01)}$

(52) Classification Coopérative des Brevets (CPC):
**G06T 7/75; G06V 10/255; G06V 10/421;
G06V 20/647;** G06T 2200/04; G06T 2207/10032

(86) Numéro de dépôt international:
**PCT/FR2018/053393**

(87) Numéro de publication internationale:
**WO 2019/122703 (27.06.2019 Gazette 2019/26)**

(54) **PROCEDE DE DETERMINATION DES BORDS SAILLANTS D'UNE CIBLE SUR UNE IMAGE**

VERFAHREN ZUR BESTIMMUNG VON VORSTEHENDEN KANTEN EINES ZIELS AUF EINEM BILD

METHOD FOR DETERMINING PROJECTING EDGES OF A TARGET ON AN IMAGE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **20.12.2017  FR 1762587**

(43) Date de publication de la demande:
**15.07.2020  Bulletin 2020/29**

(73) Titulaire: **Airbus Defence and Space SAS
31402 Toulouse Cedex 4 (FR)**

(72) Inventeurs:
 • **BROCHARD, Roland
   31402 Toulouse Cedex 4 (FR)**
 • **ROBIN, Cyril
   31402 Toulouse Cedex 4 (FR)**

(74) Mandataire: **Plasseraud IP
   66, rue de la Chaussée d'Antin
   75440 Paris Cedex 09 (FR)**

(56) Documents cités:
 • **PETIT ANTOINE ET AL: "A robust model-based
   tracker combining geometrical and color edge
   information", 2013 IEEE/RSJ INTERNATIONAL
   CONFERENCE ON INTELLIGENT ROBOTS AND
   SYSTEMS, IEEE, 3 novembre 2013 (2013-11-03),
   pages 3719-3724, XP032537635, ISSN: 2153-0858,
   DOI: 10.1109/IROS.2013.6696887 [extrait le
   2013-12-27]**
 • **Antoine Petit ET AL: "Vision-based Detection and
   Tracking for Space Navigation in a Rendezvous
   Context", Int. Symp. on Artificial Intelligence,
   Robotics and Automation in Space, i-SAIRAS, 11
   novembre 2012 (2012-11-11), pages 1-9,
   XP055505316, Extrait de l'Internet:
   URL:https://hal.inria.fr/hal-00750606/docu ment
   [extrait le 2018-09-06]**
 • **KELSEY J M ET AL: "Vision-Based Relative Pose
   Estimation for Autonomous Rendezvous And
   Docking", 2006 IEEE AEROSPACE
   CONFERENCE; BIG SKY, MONTANA; MARCH 4 -
   11, 2006, IEEE OPERATIONS CENTER,
   PISCATAWAY, NJ, 4 mars 2006 (2006-03-04),
   pages 1-20, XP010928582, DOI:
   10.1109/AERO.2006.1655916 ISBN:
   978-0-7803-9545-9**

- **Mark Damon Wheeler: "Automatic Modeling and Localization for Object Recognition - PhD thesis CMU-CS-96-188" In: "Automatic Modeling and Localization for Object Recognition - PhD thesis CMU-CS-96-188", 25 octobre 1996 (1996-10-25), Carnegie Mellon University, XP055505148, pages 1-230, page 111, alinéa 3 - page 11, alinéa 1; figures 4.1-4.7 page 121, colonne 2 - page 121, colonne de gauche page 55, alinéa 4 - page 65, alinéa 2; figures 3.4-3.6**
- **Nassir Oumer: "Visual Tracking and Motion Estimation for an On-Orbit Servicing of a Satellite - PhD Thesis" In: "Visual Tracking and Motion Estimation for an On-Orbit Servicing of a Satellite - PhD Thesis", 1 mars 2016 (2016-03-01), Universität Osnabrück, XP055504938, pages 1-166, page 100, dernier alinéa - page 102, dernier alinéa; figures 7.1-7.2**

**Description**

DOMAINE DE L'INVENTION

L'invention concerne le domaine de la vision par ordinateur et en particulier un procédé de détermination des bords saillants d'un objet tridimensionnel sur une image, à partir d'un modèle tridimensionnel de l'objet. L'invention s'inscrit dans un contexte de détection et de suivi d'une cible, notamment dans le cas de rendez-vous aériens ou spatiaux.

ETAT DE LA TECHNIQUE

Un exemple d'un rendez-vous aérien est le ravitaillement en vol d'un aéronef, qui requiert de positionner un avion ravitailleur équipé d'une perche de ravitaillement (également appelée boom en anglais) relativement à l'avion à ravitailler.

Un rendez-vous spatial est typiquement l'arrimage d'un véhicule spatial à une cible telle que la Station Spatiale Internationale.

Dans les deux cas, un véhicule d'approche mobile doit se positionner précisément relativement à une cible mobile, dont la structure tridimensionnelle peut être complexe. La navigation du véhicule d'approche est essentiellement basée sur l'analyse des images de la cible mobile prises depuis le véhicule d'approche, afin de déterminer avec exactitude la pose de la cible mobile, c'est-à-dire sa position relative et son orientation par rapport au véhicule d'approche.

Plus précisément, un procédé de traitement d'images pour estimer la pose de la cible comprend une acquisition d'images de la cible depuis le véhicule à une fréquence qui dépend des vitesses du véhicule et de la cible, puis le traitement de chaque image pour déterminer la pose de la cible sur l'image.

Le traitement d'une image comprend classiquement une première étape de détection de la cible sur l'image, et une deuxième étape de détermination de la pose de la cible.

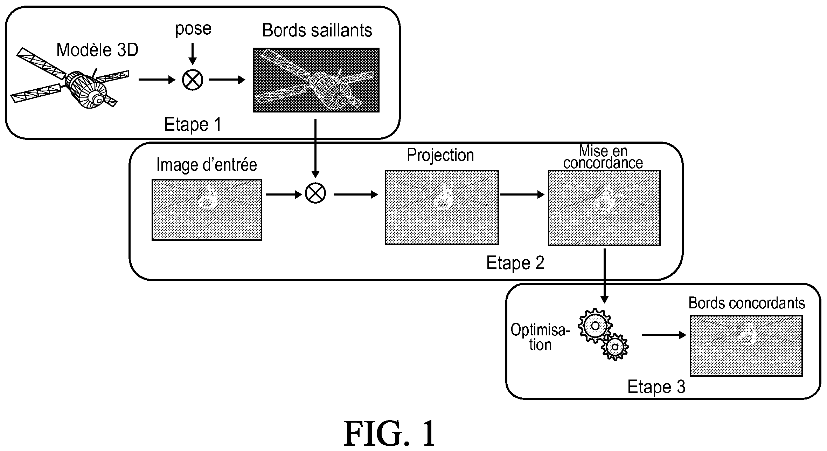

En référence à la figure 1, selon un procédé connu, la détermination de la pose de la cible sur l'image peut être mise en œuvre grâce à un modèle tridimensionnel de la cible et une estimation de la pose de la cible sur l'image.

Dans ce cas, une première étape 1 comprend la détermination des bords saillants du modèle de la cible dans la pose correspondant à l'estimation, puis le modèle tridimensionnel est mis en correspondance avec la cible au cours d'une étape 2. Une fois la correspondance obtenue entre le modèle et la cible, on peut déduire que la pose du modèle correspond à la pose de la cible sur l'image. Une étape 3 d'optimisation permet d'affiner l'estimation de la pose.

Concernant la mise en œuvre de l'étape 1, on connait un procédé de détermination des bords saillants d'un objet sur une image, à partir d'un modèle tridimensionnel de l'objet, au cours duquel on projette le modèle tridimensionnel de l'objet selon une pose qui correspond à une première estimation de la pose de l'objet sur l'image, puis on parcourt chacun des pixels de l'image obtenue pour détecter, en fonction des profondeurs relatives des pixels examinés, les bords saillants de l'objet sur cette image.

Cette technique présente plusieurs inconvénients. D'une part, le traitement pixel par pixel de l'image est très lourd en temps de calcul, et implique d'utiliser pour cela un circuit de traitement dédié, qui est typiquement un processeur graphique (également appelé GPU pour l'acronyme anglais de Graphics Processing Unit), pour pouvoir suivre la cadence du flux d'images et mettre à jour la pose en temps-réel.

En outre, le temps de calcul dépend de la taille de l'image, ce qui impose de limiter, voire de dégrader la résolution du flux d'images acquises par rapport aux capacités actuelles des capteurs utilisés.

Il existe donc un besoin pour une alternative dont la complexité est mieux maîtrisée. L'article d'Antoine Petit et al, « A robust model-based tracker combining geometrical and color edge information » 2013 IEEE/RSJ International Conférence on Intelligent Robots and Systems, 03/11/2013, XP032537635, décrit un procédé de localisation de cible comprenant l'acquisition d'une image de la cible et la détermination des bords saillants de la cible dans une pose estimée, à partir d'un maillage en 3D de la cible qui combine également des informations de couleurs.

L'article d'Antoine Petit et al. « Vision-based Détection and Tracking for Space Navigation in a Rendezvous Context », Int. Symp. On Artificial Intelligence, Robotics and Automation in Space, i-SAIRAS, 11/11/2012, XP055505316, décrit un procédé de localization de cible utilisant les capacités de calculs de cartes graphiques pour prendre en charge des modèles 3D polygonaux complets de la cible, afin de générer automatiquement des projections de ces modèles selon la pose voulue. L'article de J. M. Kelsey et al. « Vision-based Relative Pose Estimation for Autonomous Rendezvous and Docking" 2006 IEEE Aerospace Conférence , 04/03/2006, XP010928582, concerne l'estimation fine de la pose d'un objet à partir d'une estimation grossière et d'un modèle 3D.

La publication de thèse de M. Wheeler : « Automatic Modeling and Localization for Object Recognition », 25/10/1996, XP055505148 décrit également l'utilisation d'un modèle 3D d'un objet pour estimer la position de l'objet, en déterminant les points visibles du modèle dans la pose estimée de l'objet.

La publication de thèse de N. Oumer : « Visual Tracking and Motion Estimation for an On-Orbit Servicing of a Satellite", 01/03/2016, XP055504938, décrit une détermination de points visibles d'un modèle en fonction d'une pose particulière de l'objet, par une méthode de type Z-buffer utilisant une carte graphique.

PRESENTATION DE L'INVENTION

L'invention a pour but de fournir une amélioration aux solutions existantes pour la détection des bords saillants d'un objet sur une image.

Un but de l'invention est de proposer un procédé dont la complexité soit totalement maîtrisée, afin de pouvoir adapter cette complexité aux capacités de calcul disponibles dans un appareil susceptible d'effectuer un rendez-vous spatial ou aérien.

En particulier, un but de l'invention est de proposer un procédé dont la complexité est indépendante de la taille des images.

Un autre but de l'invention est de permettre la mise en œuvre du traitement par un matériel général et ne pas nécessiter l'utilisation du processeur graphique.

A cet égard, l'invention a pour objet un procédé de localisation d'une cible tridimensionnelle par rapport à un véhicule, comprenant :

- l'acquisition d'une image de la cible, et
- à partir d'un maillage en trois dimensions de la cible, et d'une estimation de pose de la cible, la détermination d'un ensemble de bords saillants du maillage de la cible dans ladite pose, et

le procédé étant caractérisé en ce que l'étape de détermination des bords saillants du maillage de la cible comprend :

a) le positionnement du maillage de la cible selon la pose,
b) la projection en deux dimensions du maillage ainsi positionné,
c) le balayage de la projection du maillage par une pluralité de lignes de balayage et, pour chaque ligne de balayage :

- la définition d'un ensemble de segments, chaque segment correspondant à l'intersection d'une maille du maillage avec la ligne de balayage et étant défini par ses extrémités,
- l'analyse des profondeurs relatives des extrémités des segments, la profondeur étant la position selon une troisième dimension orthogonale aux deux dimensions de la projection, pour sélectionner un ensemble de points d'extrémités de segments correspondant à des bords saillants du maillage.

Avantageusement, l'étape d'analyse des profondeurs relatives des extrémités des segments comprend, pour chaque extrémité de segment d'une ligne de balayage:

- la détermination de l'ensemble des segments superposés au niveau de ladite extrémité,
- le calcul de la profondeur des points de chacun des segments superposés au niveau de l'extrémité de segment considérée,
- la sélection du point dont la profondeur est minimale,
- la comparaison de la profondeur du point sélectionné à la profondeur du dernier segment visible au niveau du point sélectionné, et
- en cas de différence supérieure à un seuil déterminé, la détermination du point sélectionné comme correspondant à un bord saillant du maillage.

Dans un mode de réalisation, chaque segment est en outre défini par la normale à la maille à laquelle appartient le segment,
et l'étape d'analyse des profondeurs relatives des extrémités des segments comprend en outre, si la différence entre la profondeur du point sélectionné et la profondeur du dernier segment visible au niveau du point sélectionné est inférieure audit seuil:

- la comparaison de la direction de la normale à la maille auquel appartient le segment sur lequel se trouve le point sélectionné, avec la direction de la normale à la maille à laquelle appartient le dernier segment visible, et
- en cas de différence supérieure à un seuil déterminé, la détermination du point sélectionné comme correspondant à un bord saillant du maillage.

Dans des modes de réalisation, l'étape de projection en deux dimensions du maillage comprend en outre le calcul des normales aux côtés de la projection de chaque maille du maillage.

De préférence, le procédé comprend en outre, une fois les bords saillants du maillage de la cible déterminés, une étape de mise en correspondance des bords saillants du maillage de la cible avec des bords de la cible sur l'image.

Dans un mode de réalisation, l'ensemble des bords saillants du maillage de la cible comprend un ensemble d'éléments du maillage, chaque élément étant défini par :

- les coordonnées spatiales d'un point du maillage,
- les coordonnées de la projection en deux dimensions dudit point du maillage, positionné selon ladite pose, et
- la direction de la normale de la maille en deux-dimensions du maillage audit point.

Dans ce cas, l'étape de mise en correspondance comprend, la superposition de la projection en deux-dimensions du maillage sur l'image, et, pour chaque élément :

- La définition d'une fenêtre s'étendant le long de la normale de l'élément,
- La détection d'un bord dans la partie de l'image correspondant à la fenêtre, et

- La sélection d'un pixel de l'image correspondant au bord détecté comme correspondant à l'élément.

Avantageusement, le procédé comprend en outre une étape de mise à jour de l'estimation de la pose de la cible sur l'image par minimisation de l'écart entre les bords saillants du maillage de la cible et les points de l'image correspondants.

Dans un mode de réalisation, le procédé comprend en outre :

- pour chaque élément du maillage appartenant à l'ensemble des bords saillants du maillage, la mise à jour des coordonnées de la projection en deux dimensions du point du maillage, puis
- la réitération de l'étape de mise en correspondance entre les bords saillants du maillage et les bords de la cible sur l'image.

L'étape de détermination des bords saillants du maillage peut être mise en œuvre de manière préliminaire par un premier calculateur d'une station au sol.

Le procédé peut également comprendre l'attribution de coefficients de pondération aux éléments de l'ensemble des bords saillants.

Dans un mode de réalisation, le procédé comprend la détermination d'ensembles de bords saillants du maillage positionné selon une pluralité de poses prédéterminées par le premier calculateur, le procédé comprenant en outre la sélection d'un ensemble de bords saillants du maillage selon l'une des poses prédéterminées correspondant le plus à la pose de la cible sur l'image, et la mise en œuvre de l'étape de mise en correspondance sur ledit ensemble sélectionné.

Dans un mode de réalisation, dans lequel le maillage de la cible comprend plusieurs parties distinctes, chaque point du maillage comprenant une identification de la partie du maillage à laquelle il appartient, et les étapes de projection en deux dimensions du maillage et de balayage de la projection du maillage ne sont mise en œuvre que pour les parties du maillage correspondant à des parties de la cible présentes sur l'image.

L'invention a également pour objet un produit programme d'ordinateur, comprenant des instructions pour la mise en œuvre d'un procédé de détermination des bords saillants d'un maillage d'un objet tridimensionnel positionné selon une pose déterminée, comprenant :

a) le positionnement du maillage de l'objet selon la pose,
b) la projection en deux dimensions du maillage ainsi positionné,
c) le balayage de la projection du maillage par une pluralité de lignes de balayage et, pour chaque ligne de balayage :

- la définition d'un ensemble de segments, chaque segment correspondant à l'intersection d'une maille du maillage avec la ligne de balayage et étant défini par ses extrémités,
- l'analyse des profondeurs relatives des extrémités des segments, la profondeur étant la position selon une troisième dimension orthogonale aux deux dimensions de la projection, pour sélectionner un ensemble de points d'extrémités de segments correspondant à des bords saillants du maillage,

quand il est mis en œuvre par un calculateur.

L'invention a pour objet un système de localisation d'une cible tridimensionnelle par rapport à un véhicule, comprenant un capteur adapté pour acquérir des images de la cible, et une unité de contrôle comprenant un calculateur et une mémoire, le système étant caractérisé en ce qu'il est configuré pour mettre en œuvre le procédé selon la description qui précède.

Le procédé selon l'invention permet, par un balayage d'une projection du modèle tridimensionnel de l'objet, par un ensemble de lignes de balayage, de ne considérer que les extrémités de segments correspondant à l'intersection des mailles du modèle avec les lignes de balayage comme des éléments potentiels des bords saillants du modèle.

Ainsi, il n'est pas nécessaire de recréer tous les pixels d'une image correspondant à la projection du modèle tridimensionnel, mais uniquement certains points correspondants à des bords sont considérés. De ce fait, le temps de calcul nécessaire à la mise en œuvre du procédé est considérablement réduit.

De plus, la complexité du procédé est maîtrisée car elle ne dépend que de la taille du modèle tridimensionnel et du taux d'échantillonnage réalisé avec les lignes de balayage, et donc pas de la taille des images en entrée du procédé.

La mise en œuvre du procédé ne nécessite donc pas de matériel spécifique tel qu'un processeur graphique, et elle est donc compatible avec du matériel existant, par exemple pour une installation dans des aéronefs déjà exploités. L'indépendance par rapport à la taille de l'image permet également d'utiliser, pour l'acquisition des images, des capteurs présentant une meilleure résolution spatiale que ceux utilisés dans l'art antérieur, ce qui permet d'améliorer la précision globale des traitements d'images qui sont réalisés à partir de ces capteurs.

La réduction du temps de calcul permet également l'ajout de traitements supplémentaires, améliorant par exemple la robustesse, l'intégrité ou la précision de la solution.

DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1, déjà décrite, représente un exemple de contexte d'implémentation de l'invention,
- Les figures 2a et 2b représentent schématiquement deux variantes d'un système permettant l'implémentation du procédé.
- La figure 3 représente schématiquement les principales étapes d'un procédé selon un mode de réalisation de l'invention.
- La figure 4 représente un exemple de balayage d'un maillage par des lignes de balayage horizontales.

DESCRIPTION DETAILLEE D'AU MOINS UN MODE DE REALISATION DE L'INVENTION

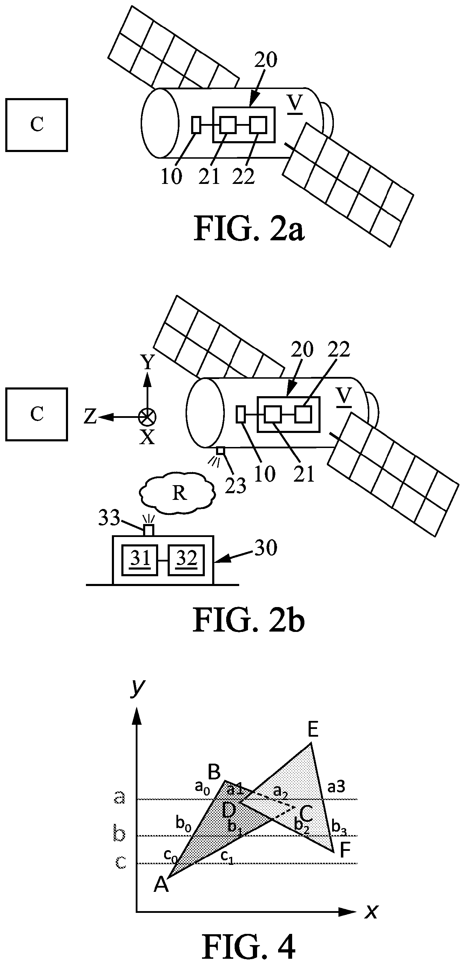

On va maintenant décrire les principales étapes d'un procédé de détermination des bords saillants d'un objet dans une image. En référence aux figures 2a et 2b, ce procédé s'inscrit avantageusement dans un contexte de rendez-vous spatial ou aérien, où un véhicule tel qu'un vaisseau spatial ou un aéronef acquiert un flux d'images d'une cible dont il se rapproche, détermine la pose de la cible par une analyse en temps-réel des images acquises, et adapte en temps-réel les commandes de navigation du véhicule en fonction de la pose ainsi déterminée.

Comme on le verra plus en détails par la suite, ce procédé est donc avantageusement mis en œuvre en temps-réel sur un flux d'images, à une fréquence correspondant à la fréquence d'acquisition des images, cette fréquence étant comprise entre 10 et 100 Hz, par exemple entre 30 et 60Hz.

Sur la figure 2a on a représenté un premier mode de réalisation d'un système pour la mise en œuvre du procédé. Ce système comprend un capteur 10, embarqué dans un véhicule V et adapté pour acquérir des images de la cible C. Le capteur 10 peut être un dispositif de télédétection par laser ou LIDAR (acronyme de la terminologie anglais « LIght Détection And Ranging »), ou une caméra monoculaire ou stéréo.

Le système comprend en outre une unité de contrôle 20 comprenant au moins un calculateur 21 et une mémoire 22. Le calculateur est par exemple un processeur ou un microprocesseur.

La mémoire stocke les instructions de code nécessaires à la mise en œuvre de tout ou partie du procédé, et le calculateur est adapté pour exécuter ces instructions de code.

Dans une variante de réalisation, selon la revendication 10, représentée sur la figure 2b, une partie du procédé est mise en œuvre au sol pour alléger encore les calculs mis en œuvre par le calculateur 21 embarqué, et le cas échéant permettre la mise en œuvre de traitements supplémentaires qui ne pourraient pas être réalisés par le calculateur 21. Ceci peut également permettre une uniformité des traitements mis en œuvre par le système au sol pour plusieurs véhicules embarqués équipés de capacités de traitement différentes.

Dans ce cas, le système comprend en outre une unité de traitement 30 au sol, comprenant une mémoire 32 et un calculateur 31. Le calculateur 31 et la mémoire 32 peuvent alors présenter des performances et des caractéristiques supérieures au calculateur 21 et à la mémoire 22, car ils ne sont pas contraints par les mêmes problématiques d'intégration et d'alimentation que dans le véhicule V.

Avantageusement, le système peut en outre comprendre des moyens de communication entre l'unité de traitement au sol 30 et l'unité de traitement embarquée 20, ces moyens de communication comprenant avantageusement de part et d'autre des interfaces de connexion sans-fil 23,33, à un réseau T de communication tel qu'internet, par exemple par Wi-Fi, 3G, 4G ou encore par communication satellitaire.

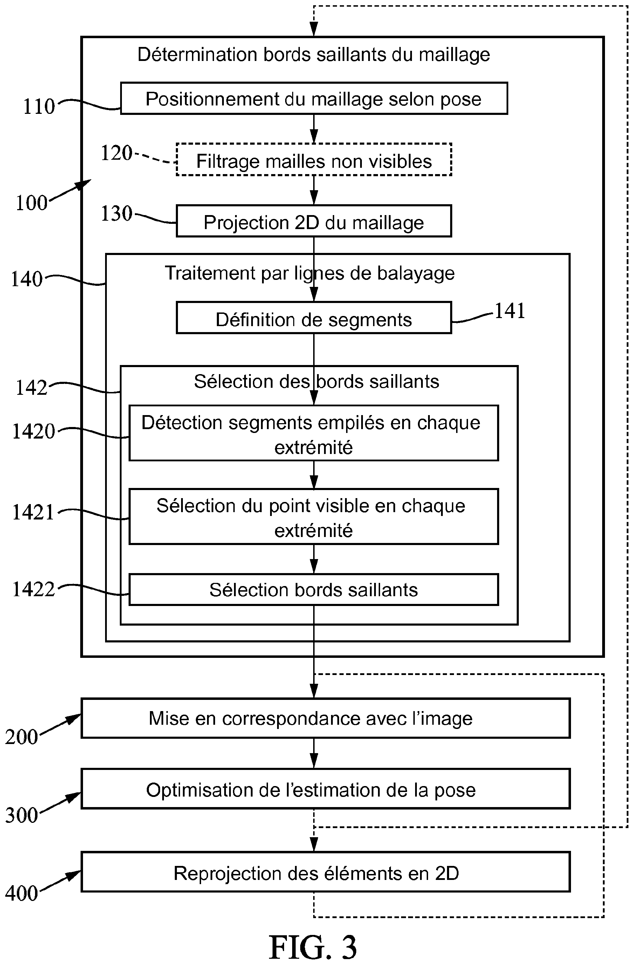

En référence à la figure 3, on a représenté les principales étapes du procédé de détermination des bords saillants d'un objet.

Les données d'entrée du procédé comprennent une image acquise par le capteur 10 à bord du véhicule V, sur laquelle figure la cible C, la cible étant l'objet dont on souhaite identifier les bords saillants. En variante, l'image sur laquelle le procédé est mise en œuvre peut également provenir d'une bibliothèque d'images stockée au sol, ou encore peut avoir été générée en fonction d'une hypothèse initiale de positions relatives entre le véhicule et la cible.

Les données d'entrée comprennent également un modèle tridimensionnel de la cible, ainsi qu'une estimation, éventuellement approximative, de la pose de la cible sur l'image. Cette estimation de la pose peut provenir d'une étape de détection de la cible mise en œuvre auparavant (voir figure 1), ou peut provenir d'une itération précédente du procédé, ou encore peut provenir d'une simulation des positions relatives du véhicule et de la cible d'après la trajectoire théorique du véhicule.

Le modèle tridimensionnel de la cible est avantageusement un maillage de la cible, c'est-à-dire un ensemble de mailles formant la surface de la cible. Les mailles sont des formes géométriques, l'ensemble du maillage étant réalisé avec la même forme géométrique. Par exemple, les mailles peuvent être triangulaires ou polygonales, et sont alors définies par les coordonnées en trois dimensions de leurs sommets. En variante, les mailles peuvent être des sphères ou des sphéroïdes (c'est-à-dire un ellipsoïde de révolution), et sont alors définies par les coordonnées en trois dimensions de leur centre et leur rayon.

Dans la suite, le procédé est décrit en prenant l'exemple non-limitatif d'un maillage tridimensionnel dont les mailles sont triangulaires. On note alors $M(a,b,c)$ le triangle M défini par ses sommets $a,b,c$, chaque sommet correspondant à un vertex tridimensionnel.

En référence à la figure 2b, les coordonnées d'un point du maillage sont définies dans un repère orthonormé dont les axes X et Y définissent le plan de l'image acquise par le capteur, et l'axe Z correspond à l'axe optique du capteur, qui est orienté vers les Z positifs. La position d'un point sur l'axe Z correspond à sa proximité par rapport au capteur, de sorte que plus Z est faible et plus l'objet est proche du capteur. Z peut éventuellement être négatif, par exemple dans le cas de l'amarrage d'un vaisseau à la station spatiale internationale. On appellera par la suite profondeur la position d'un point ou d'un objet sur l'axe Z.

De manière préliminaire, les données d'entrée (image de la cible et maillage tridimensionnel) sont chargées ou acquises par le calculateur 21 ou 31 pour la mise en œuvre du procédé. Le procédé comprend ensuite une étape 100 de détermination des bords saillants du maillage de l'objet dans la pose fournie en entrée.

Cette étape comprend d'abord le positionnement 110 du maillage tridimensionnel de l'objet selon ladite pose.

La pose p de l'objet comprend à la fois l'orientation de l'objet et sa position par rapport au véhicule, elle comprend donc une matrice 3x3 de rotation notée R, et un vecteur colonne de dimension 3 noté T, correspondant à la translation. On note par la suite p = (R,T).

L'étape 110 comprend alors la transposition de chaque maille du modèle selon la pose (R,T) ce qui correspond, pour un maillage triangulaire, à calculer pour chaque triangle M :

$$M'(a',b',c') = KR * M(a,b,c) + KT$$

Où M' est le triangle repositionné correspondant à M, et a', b', c', sont ses coordonnées, qui sont de préférence ordonnées par rapport à leur position sur l'axe Z. K est une matrice 3x3 de correction obtenue par calibration du capteur 10, elle est supposée connue et constante.

Avantageusement, mais facultativement, le procédé comprend ensuite une étape de filtrage 120 des mailles du maillage tridimensionnel qui sont considérées comme non visibles dans la pose adoptée à l'étape 110 par le maillage, parce que ces mailles se situent en dehors de l'espace délimité par le champ de vision du capteur ou en amont du capteur par rapport à l'axe Z.

Cette étape comprend le calcul préliminaire, pour chaque maille, de la normale à la maille. Dans le cas d'un triangle M(a, b, c), ce calcul est mis en œuvre par :

$$n = (b - a) \wedge (c - a)$$

La normale de chaque maille est ajustée selon la pose de l'objet :

$$n' = R * n$$

L'étape de filtrage 120 comprend ensuite :

- Le filtrage des mailles dont la normale n'est pas orientée vers le capteur, c'est-à-dire des mailles pour lesquelles la relation suivante est respectée :

$$n'.(R * a + T) > 0$$

- Puis, un paramètre $Z_{near}$ étant défini correspondant à la position minimale sur l'axe Z d'un point pour qu'il soit visible par le capteur, l'étape 120 comprend également le filtrage des mailles pour lesquelles le point de profondeur la plus importante Zmax est inférieur :

$$Z_{max} \leq Z_{near}$$

- Pour toutes les autres mailles, on conserve la maille si elle est intégralement visible, et sinon on découpe la maille pour ne conserver que les parties visibles.

Dans l'exemple d'une maille triangulaire, on compare la profondeur $Z_{min}$ du point de profondeur minimale à $Z_{near}$, et on conserve les mailles pour lesquelles :

$$Z_{near} < Z_{min}$$

Dans le cas contraire :

- Si les deux autres sommets présentent une profondeur supérieure à $Z_{near}$, la maille est divisée en trois sous-triangles définis avec deux nouvelles coordonnées de sorte que deux des trois sous-triangles sont visibles, et les deux sous-triangles ont au moins un de leurs sommets à une profondeur Z=$Z_{near}$, et on conserve ces derniers,
- Si un seul autre sommet présente une profondeur supérieure à $Z_{near}$, la maille est divisée en trois sous-triangles définis avec deux nouvelles coordonnées tels qu'un des trois sous-triangles est visible et présente au moins un de ses sommets à une profondeur Z=$Z_{near}$, et on conserve ce dernier.

Le procédé comprend ensuite une étape 130 de projection du maillage tridimensionnel de l'objet ainsi positionné dans le plan (X,Y) de l'image. En considérant un triangle M'(a',b',c'), cette étape est mise en œuvre en calculant les coordonnées du triangle projeté M"(A', B',C') comme suit :

$$A' = (\frac{a'_x}{a'_z}, \frac{a'_y}{a'_z})$$

Où $a'_x$, $a'_y$ et $a'_z$ sont les coordonnées en X, Y et Z de a'. Le même calcul est réalisé mutatis mutandis pour B' et C'.

Le procédé comprend ensuite une étape 140 de traitement de l'image par balayage de la projection du maillage avec un ensemble de lignes de balayage. Cette étape est de préférence mise en œuvre deux fois, une fois avec des lignes de balayage s'étendant selon l'axe X, et une fois avec des lignes de balayage s'étendant selon l'axe Y.

Pour la description détaillée de la mise en œuvre de cette étape, on prend l'exemple de lignes de balayage s'étendant selon l'axe Y, la transposition pour des lignes de balayage s'étendant selon l'axe X étant faite en remplaçant X par Y et réciproquement.

Avant de mettre en œuvre cette étape de balayage, les coordonnées de chaque maille projetée du maillage sont ordonnées selon l'axe de la ligne de balayage, c'est-à-dire selon l'axe Y dans l'exemple que l'on développe. De plus, les normales aux côtés de chaque maille projetée dans le plan (X,Y) sont également calculées.

Lors de l'étape de balayage, l'image du maillage projeté selon la pose p=(R,T) est parcourue par un ensemble de lignes de balayage à un taux d'échantillonnage défini au préalable, ou adapté dynamiquement en fonction d'une contrainte à respecter en termes de complexité du traitement. Par exemple, on peut prévoir autant de lignes de balayages que de pixels sur l'axe Y, ou une ligne sur deux, ou encore une sur trois.

L'étape de traitement par balayage comprend une étape 141 représentée schématiquement sur la figure 4, et lors de laquelle, pour chaque ligne de balayage, un ensemble de segments est défini à l'intersection entre la ligne de balayage et une maille du maillage. Chaque segment est défini par :

-    les coordonnées en trois dimensions de ses extrémités, la profondeur (position en Z) étant déterminée à partir des coordonnées des sommets de la maille à laquelle appartient l'extrémité, et l'une des deux autres coordonnées étant déterminée à partir de la ligne de balayage ayant permis d'obtenir le segment,
-    Les normales aux côtés des mailles projetées auxquelles les extrémités appartiennent respectivement,
-    Une normale en trois dimensions à la maille à laquelle appartient le segment, et
-    Un identifiant du segment.

Sur l'exemple représenté sur la figure 4, on obtient donc ainsi :

-    Lors du balayage par la ligne a, deux segments [$a_0$, $a_2$] et [$a_1$, a3],
-    Lors du balayage par la ligne b, deux segments [$b_0$, $b_1$] et [$b_2$, $b_3$], et
-    Lors du balayage par la ligne c, un segment [$c_0$, $c_1$].

On comprend donc que chaque segment est défini dans l'espace, car ses extrémités ont des coordonnées en trois dimensions, mais il est obtenu à partir de l'intersection d'une ligne de balayage et d'une projection en deux dimensions du maillage.

Les extrémités des segments ainsi définis sont donc candidates pour correspondre aux bords saillants du maillage de l'objet dans la pose (R,T).

Le procédé comprend ensuite la sélection 142 des extrémités des segments correspondant aux bords saillants par l'analyse des profondeurs relatives desdites extrémités et des normales associées.

Pour chaque ligne de balayage, les coordonnées de l'ensemble des extrémités des segments définis pour la ligne de balayage considérée sont ordonnées sur l'axe orthogonal à l'axe de la ligne, c'est-à-dire l'axe X dans l'exemple développé.

Pour reprendre l'exemple qui précède, les extrémités des segments de la ligne de balayage a sont ordonnées comme suit : $a_0$, $a_1$, $a_2$, $a_3$.

Puis chaque ligne de balayage est à nouveau parcourue depuis l'origine. A chaque extrémité de segment rencontrée, on détermine au cours d'une sous-étape 1420 les segments qui sont empilés au niveau de ladite extrémité en associant à ladite extrémité l'identifiant des segments superposés ainsi que la position recalculée en Z de chacun des segments empilés au niveau de ladite extrémité. Ceci peut être fait en créant un ensemble auquel on ajoute l'identifiant du segment et la position en Z quand l'extrémité rencontrée ouvre le segment, et en retirant ces données lorsque l'extrémité rencontrée ferme le segment.

Toujours lors du parcours d'une ligne de balayage, le procédé comprend, pour chaque extrémité rencontrée, la sélection 1421 du point du segment le plus proche du capteur parmi les segments empilés à cette extrémité, c'est-à-dire le point dont la coordonnée en Z est minimale : c'est ce point qui est visible par le capteur, même s'il ne correspond pas nécessairement à un bord saillant de l'objet.

Pour reprendre l'exemple décrit en référence à la figure 4, pour la ligne de balayage a les points d'extrémités $a_0$, $a_1$ et $a_3$ sont retenus.

Le procédé comprend ensuite une étape 1422 de sélection, parmi les bords visibles, ceux qui sont saillants. Cette étape est mise en œuvre lors du même parcours de la ligne de balayage que les étapes 1420 et 1421.

Pour déterminer si un point sélectionné est un bord saillant de l'objet, on compare la coordonnée en Z du point sélectionné à la coordonnée en Z au même point du dernier segment considéré comme visible au cours du balayage de la ligne. S'il existe une différence entre ces coordonnées supérieure à un seuil prédéterminé, alors une rupture de continuité de profondeur est détectée et le point correspond à un bord saillant. Le seuil prédéterminé est ajusté pour ne tenir compte que des ruptures franches de continuité et éviter de sélectionner des détails non pertinents. Dans l'exemple décrit ci-avant, les points $a_0$, $a_1$ et $a_3$ appartiennent tous à des bords saillants car ils se situent à des ruptures de continuité de profondeur des mailles correspondantes. Lors de l'initialisation, le premier point croisé est considéré comme visible.

Sinon, on compare la direction de la normale du point sélectionné avec la direction de la normale à la maille auquel le dernier segment visible appartient. La « normale du point sélectionné » est la normale à la maille à laquelle appartient le segment sur lequel se trouve le point sélectionné.

Cette comparaison est typiquement réalisée par calcul du produit scalaire entre les normales et comparaison du résultat à un seuil prédéterminé.

S'il existe une différence entre ces directions supérieure à un seuil prédéterminé, alors une discontinuité d'orientation des mailles auxquelles appartiennent les points est détectée, et le point correspond à un bord saillant. Si elles sont identiques, alors le point correspond à un bord commun et non saillant entre deux mailles.

Chaque point considéré comme un bord saillant du modèle est ajouté à un ensemble E sous la forme d'un élément $e_i = (X_i, proj_p(X_i), n_i)$ du maillage défini par les données suivantes :

- Les coordonnées en trois dimensions du point $X_i$ dans le maillage,
- Les coordonnées du point dans la projection en deux dimensions du maillage $proj_p(X_i)$, et
- La normale $n_i$ à la projection en deux dimensions du côté de la maille auquel le point appartient.

Dans certains modes de réalisation, les éléments de l'ensemble peuvent également comprendre des informations complémentaires, comme par exemple un élément d'identification, un indice de confiance ou un coefficient de pondération, etc.

Les éléments de l'ensemble sont mémorisés dans la mémoire 22 ou dans la mémoire 32 selon le mode de réalisation de l'invention.

A l'issue de l'étape 100, un ensemble de bords saillants du modèle dans la pose (R,T) de l'objet sur l'image a donc été construit, uniquement à partir d'extrémités de segments à l'intersection des mailles et de lignes de balayage. Le procédé décrit ci-avant permet d'éviter de reconstruire l'intégralité des segments ainsi défini et d'étudier, pixel par pixel, quelles mailles sont visibles dans la pose considérée. Le procédé est donc particulièrement peu coûteux en temps de calcul.

Selon une variante avantageuse de l'invention, , selon la revendication 10, cette étape 100 est mise en œuvre par une station au sol (comme sur la figure 2b), de manière préliminaire à toute opération de rendez-vous.

On peut en effet, en fonction de la trajectoire d'approche d'un objet, prévoir une pose prévisible que la cible aura sur l'image acquise depuis le véhicule d'approche, cette pose étant utilisée pour la mise en œuvre de l'étape 100.

Ceci permet typiquement de mettre en œuvre d'autres traitements, par exemple la sélection, par un opérateur, des éléments de l'ensemble plus pertinents, par l'attribution de coefficients de pondération relatifs à chaque élément. Par exemple, pour un élément non pertinent, celui-ci peut être associé à un coefficient de pondération très faible ou nul, voire même supprimé, et pour un élément très pertinent il peut être associé à un coefficient de pondération plus élevé.

On peut également prévoir dans ce cas de calculer un ensemble de bords saillants d'un objet, en fonction de plusieurs poses prédéterminées. Ensuite, lors d'une phase d'approche d'une cible par un véhicule, le système de traitement embarqué dans le véhicule peut choisir l'ensemble de bords saillants correspondant à la pose la plus proche de la pose réelle de la cible sur l'image parmi l'ensemble des poses prédéterminées. De cette façon, on n'a pas besoin de mettre en œuvre l'étape 100 dans le véhicule (qui dispose de moyens de traitement limités) pour obtenir directement un ensemble assez pertinent de bords saillants.

De retour à la figure 3, une fois les bords saillants du maillage de l'objet déterminés, le procédé comprend une étape 200 de mise en correspondance de ces bords avec les bords de l'objet sur l'image. Cette étape est en revanche mise en œuvre par le calculateur embarqué 21 du véhicule.

Lors de cette étape, on génère, pour chaque élément de l'ensemble des bords saillants précédemment construit, une fenêtre de recherche de bord centrée sur le pixel de l'image d'entrée correspondant à la position en deux dimensions de l'élément (position de la projection du point dans la pose (R,T)).

Cette fenêtre est construite de manière à s'étendre dans la direction de la normale de l'élément, de part et d'autre de cette position en deux-dimensions. La largeur de la fenêtre est d'un pixel, et la longueur est choisie en fonction de l'amplitude du mouvement attendu dans l'image, par exemple elle peut être comprise entre 5 et 30 pixels pour une image de 2048 par 2048 pixels. La longueur peut être fixée en déterminant une demi-longueur qui s'étend selon la normale dans chacune des deux directions possibles par rapport au pixel considéré. La longueur est égale à deux fois la demi-longueur plus le pixel considéré.

Le procédé comprend ensuite l'implémentation d'un algorithme de détection de bords dans les pixels contenus dans la fenêtre. L'algorithme est de préférence l'algorithme de Deriche, connu de l'Homme du Métier.

Pour chaque élément, un pixel de l'image est sélectionné comme correspondant à l'élément sur l'image, on note $x_i$ le pixel de l'image correspondant à l'élément $e_i$.

Avantageusement, une fois la mise en correspondance obtenue, le procédé comprend une étape 300 d'optimisation visant à améliorer l'estimation de la pose utilisée en entrée, et fournir la pose améliorée en entrée de l'itération suivante du procédé.

Cette étape d'optimisation est mise en œuvre en minimisant l'écart entre la projection des éléments de l'ensemble des bords saillants obtenu à l'issue de l'étape 100 et les positions des points correspondants de l'image identifiés à l'étape 200. Cette minimisation est réalisée par la méthode des moindres carrées mise en œuvre par le calcul suivant :

$$\min_{p} \sum_{e \in E} f\left(\left[proj_p(X_i) - x_i\right).n_i\right]^2\right)$$

Où f est une fonction de coût, par exemple définie comme suit : $f(x) = \log(1 + x)$, $f(x) = 2 \times \left(\sqrt{1 + x} - 1\right)$, ou $f(x) = x$.

Avantageusement, la fonction f peut être choisie pour permettre de mitiger la contribution des éléments déviants ou isolés par rapport aux autres. A cet égard, elle peut également tenir compte de données complémentaires des éléments de l'ensemble des bords saillants, comme typiquement un indice de confiance ou un coefficient de pondération.

Pendant la mise en œuvre de cette étape, les éléments e de l'ensemble E restent les mêmes, c'est-à-dire que leur position en trois dimensions est identique. Ce qui évolue est la position de leur projection sur le plan de l'image, qui dépend de la pose p qui est mise à jour à l'issue de cette étape d'optimisation.

Dans un mode de réalisation avantageux de l'étape 300, on peut tirer profit du fait que la position, à la fois en pose et en localisation absolue du véhicule d'approche, est connue pour en déduire la position de la cible par rapport au véhicule. De ce fait, on peut en déduire le vecteur de rotation R de la pose p=(R,T). Dans l'étape 300, la seule optimisation concerne alors le vecteur de translation T.

Pour ce faire, on considère, en notant O le centre optique du capteur dans le repère de la cible, et $U_i$ les vecteurs unitaires dont la direction est celle des points $x_i$ dans le repère de la caméra, alors pour chaque $(x_i, n_i)$, il existe un unique plan contenant O et qui coupe le plan image en $x_i$ en une droite orthogonale à $n_i$. On note $N_i$ la normale à ce plan.

On peut calculer la position de O, connaissant $X_i$ et $N_i$, avec la méthode suivante :

$$A_i = N_i \ {}^{t}N_i$$

$$A = \sum_{i} A_i$$

$$B = \sum_{i} A_i X_i$$

$$C = A^{-1}B$$

La position de la cible dans le repère du capteur est donc -C. Pour pouvoir appliquer cette formule il faut que A soit inversible, ce qui nécessite de disposer d'au moins trois éléments $(X_i, x_i, n_i)$. Cette détermination de la position peut être mise en œuvre par une méthode de type RANSAC mise en œuvre par le calculateur embarqué 21.

Le procédé peut ensuite être répété, avec la pose p mise à jour à l'issue de l'étape 300, et pour une nouvelle image du flux d'images provenant du capteur. Dans certains cas, par exemple pour lesquels l'estimation initiale de la pose était très approximative et la fréquence d'acquisition d'images du capteur est faible, le procédé peut aussi être répété avec la pose mise à jour sur la même image.

En variante, au lieu de répéter l'étape 100 ci-dessus, le procédé peut comprendre une étape 400 au cours de laquelle seules les positions des projections en deux-dimensions des éléments sont recalculées avec la pose mise à jour, en partant du principe que les éléments visibles varient faiblement et que la perte de précision liée à ce calcul partiel est faible.

L'étape 400 est alors suivie d'une nouvelle occurrence de l'étape 200 pour trouver les points correspondant sur l'image, et de l'étape 300 pour affiner la pose.

Dans ce cas, le procédé est avantageusement mis en œuvre par le système décrit en référence à la figure 2b, comprenant une unité de traitement 20 embarquée et une unité de traitement au sol 30. En effet, les calculs de l'étape 100 sont alors de préférence exécutés par le calculateur 31 de l'unité de traitement au sol 30 et seules les étapes 200, 300, et 400 sont réalisées par le calculateur 21 de l'unité de traitement embarquée. Les calculs de l'étape 100 peuvent même être réalisés avant une mission à partir d'une estimation a priori de la pose de l'objet sur l'image en fonction du déroulement théorique de la mission. On peut donc charger les éléments obtenus à l'issue de l'étape 100 dans la mémoire 22 de l'unité de traitement embarquée 20.

En limitant l'intervention du calculateur embarqué aux seules étapes 200, 300 et 400, on peut ainsi rendre du temps de calcul disponible au calculateur pour que celui-ci puisse réaliser d'autres traitements. Ce mode de réalisation simplifie également la conception de la mémoire et son intégration puisque, les éléments étant pré-calculés, la taille de la mémoire embarquée requise pour les mémoriser est connue.

Selon une autre variante encore, le procédé peut comprendre à certaines itérations une implémentation partielle de l'étape 100. Dans ce cas, lors d'une implémentation de l'étape 100, l'étape 140 de balayage de la projection du modèle de l'objet n'est mise en œuvre que pour certaines, et non la totalité, des lignes de balayage, c'est-à-dire par exemple pour une bande de la projection d'une certaine largeur, la mise en œuvre suivante de l'étape 100 comprenant l'implémentation de l'étape 140 pour d'autres lignes de balayage, etc. Ceci permet de répartir entre plusieurs itérations la partie du procédé la plus demandeuse en temps de calcul.

Selon une autre variante de réalisation, selon la revendication 13, qui peut être combinée avec les différentes variantes décrites ci-avant, le modèle en trois dimensions de l'objet comprend plusieurs sous-parties, notamment s'il existe plusieurs configurations possibles de la cible.

Dans ce cas, chaque point du maillage est défini non seulement par ses coordonnées en trois dimensions, mais également par une donnée indiquant la partie du maillage à laquelle il appartient. Chaque élément de l'ensemble des bords saillants comprend alors également une donnée indiquant la partie du maillage à laquelle il correspond. Un traitement préliminaire d'images de la cible peut permettre de déterminer les parties du maillage qui sont présentes, et dans ce cas la mise en œuvre des étapes 130 et 140 n'est mise en œuvre que sur les parties du maillage qui sont visibles.

**Revendications**

1. Procédé de localisation d'une cible tridimensionnelle par rapport à un véhicule, mis en œuvre par un système comprenant un capteur (10) adapté pour acquérir des images de la cible, et un calculateur, et comprenant :

     - l'acquisition d'une image de la cible, et
     - à partir d'un maillage en trois dimensions de la cible, et d'une estimation de pose de la cible, la détermination (100) d'un ensemble de bords saillants du maillage de la cible dans ladite pose, et

le procédé étant **caractérisé en ce que** l'étape (100) de détermination des bords saillants du maillage de la cible comprend :

     a) le positionnement (110) du maillage de la cible selon la pose,
     b) la projection (130) en deux dimensions du maillage ainsi positionné,
     c) le balayage (140) de la projection du maillage par une pluralité de lignes de balayage et, pour chaque ligne de balayage :

         - la définition (141) d'un ensemble de segments, chaque segment correspondant à l'intersection d'une maille du maillage avec la ligne de balayage et étant défini par ses extrémités,
         - l'analyse des profondeurs relatives des extrémités des segments, la profondeur étant la position selon une troisième dimension orthogonale aux deux dimensions de la projection, pour sélectionner (142) un ensemble de points d'extrémités de segments correspondant à des bords saillants du maillage.

2. Procédé selon la revendication 1, dans lequel l'étape (142) d'analyse des profondeurs relatives des extrémités des segments comprend, pour chaque extrémité de segment d'une ligne de balayage :

     - la détermination (1420) de l'ensemble des segments superposés au niveau de ladite extrémité,
     - le calcul de la profondeur des points de chacun des segments superposés au niveau de l'extrémité de segment considérée,
     - la sélection du point (1421) dont la profondeur est minimale,
     - la comparaison de la profondeur du point sélectionné à la profondeur du dernier segment visible au niveau du point sélectionné, et
     - en cas de différence supérieure à un seuil déterminé, la détermination du point sélectionné (1422) comme correspondant à un bord saillant du maillage.

3. Procédé selon la revendication 2, dans lequel chaque segment est en outre défini par la normale à la maille à laquelle appartient le segment, et l'étape d'analyse des profondeurs relatives des extrémités des segments comprend en outre, si la différence entre la profondeur du point sélectionné et la profondeur du dernier segment visible au niveau du point sélectionné est inférieure audit seuil :

     - la comparaison de la direction de la normale à la maille auquel appartient le segment sur lequel se trouve le point sélectionné, avec la direction de la normale à la maille à laquelle appartient le dernier segment visible, et
     - en cas de différence supérieure à un seuil déterminé, la détermination du point sélectionné (1422) comme correspondant à un bord saillant du maillage.

4. Procédé selon la revendication 3, dans lequel l'étape de projection en deux dimensions du maillage comprend en outre le calcul des normales aux côtés de la projection de chaque maille du maillage.

5. Procédé selon l'une des revendications précédentes, comprenant en outre, une fois les bords saillants du maillage de la cible déterminés, une étape de mise en correspondance (200) des bords saillants du maillage de la cible avec des bords de la cible sur l'image.

**6.** Procédé selon l'une des revendications précédentes, dans lequel l'ensemble des bords saillants du maillage de la cible comprend un ensemble d'éléments du maillage, chaque élément étant défini par :

- les coordonnées spatiales d'un point du maillage,
- les coordonnées de la projection en deux dimensions dudit point du maillage, positionné selon ladite pose, et
- la direction de la normale de la maille en deux-dimensions du maillage audit point.

**7.** Procédé selon la revendication 6 en combinaison avec la revendication 5, dans lequel l'étape de mise en correspondance (200) comprend, la superposition de la projection en deux-dimensions du maillage sur l'image, et, pour chaque élément :

- La définition d'une fenêtre s'étendant le long de la normale de l'élément,
- La détection d'un bord dans la partie de l'image correspondant à la fenêtre, et
- La sélection d'un pixel de l'image correspondant au bord détecté comme correspondant à l'élément.

**8.** Procédé selon l'une des revendications 5 à 7, comprenant en outre une étape (300) de mise à jour de l'estimation de la pose de la cible sur l'image par minimisation de l'écart entre les bords saillants du maillage de la cible et les points de l'image correspondants.

**9.** Procédé selon la revendication 8 combinée à la revendication 6, comprenant en outre :

- pour chaque élément du maillage appartenant à l'ensemble des bords saillants du maillage, la mise à jour des coordonnées de la projection (400) en deux dimensions du point du maillage, puis
- la réitération de l'étape de mise en correspondance (200) entre les bords saillants du maillage et les bords de la cible sur l'image.

**10.** Procédé selon l'une des revendications précédentes, dans lequel l'étape de détermination des bords saillants du maillage (100) est mise en œuvre de manière préliminaire par un premier calculateur (31) d'une station au sol.

**11.** Procédé selon la revendication 10, comprenant en outre l'attribution de coefficients de pondération aux éléments de l'ensemble des bords saillants.

**12.** Procédé selon l'une des revendications 10 ou 11, comprenant la détermination d'ensembles de bords saillants du maillage positionné selon une pluralité de poses prédéterminées par le premier calculateur (31), le procédé comprenant en outre la sélection d'un ensemble de bords saillants du maillage selon l'une des poses prédéterminées correspondant le plus à la pose de la cible sur l'image, et la mise en œuvre de l'étape de mise en correspondance (200) sur ledit ensemble sélectionné.

**13.** Procédé selon l'une des revendications précédentes, dans lequel le maillage de la cible comprend plusieurs parties distinctes, chaque point du maillage comprenant une identification de la partie du maillage à laquelle il appartient, et les étapes de projection en deux dimensions du maillage et de balayage de la projection du maillage ne sont mise en œuvre que pour les parties du maillage correspondant à des parties de la cible présentes sur l'image.

**14.** Produit programme d'ordinateur, comprenant des instructions pour la mise en œuvre d'un procédé de détermination des bords saillants d'un maillage d'un objet tridimensionnel positionné selon une pose déterminée, comprenant :

a) le positionnement (110) du maillage de l'objet selon la pose,
b) la projection (130) en deux dimensions du maillage ainsi positionné,
c) le balayage (140) de la projection du maillage par une pluralité de lignes de balayage et, pour chaque ligne de balayage :

- la définition (141) d'un ensemble de segments, chaque segment correspondant à l'intersection d'une maille du maillage avec la ligne de balayage et étant défini par ses extrémités,
- l'analyse des profondeurs relatives des extrémités des segments, la profondeur étant la position selon une troisième dimension orthogonale aux deux dimensions de la projection, pour sélectionner (142) un ensemble de points d'extrémités de segments correspondant à des bords saillants du maillage,

quand il est mis en œuvre par un calculateur.

**15.** Système de localisation d'une cible tridimensionnelle par rapport à un véhicule, comprenant un capteur (10) adapté pour acquérir des images de la cible, et une unité de contrôle (20) comprenant un calculateur (21) et une mémoire, le système étant **caractérisé en ce qu'**il est configuré pour mettre en œuvre le procédé selon l'une des revendications 1 à 14.

**Patentansprüche**

1. Verfahren zur Lokalisierung eines dreidimensionalen Ziels bezüglich eines Fahrzeugs, durchgeführt von einem System, das einen Sensor (10), der geeignet ist, Bilder des Ziels zu erfassen, und einen Rechner enthält, und enthält:

    - die Erfassung eines Bilds des Ziels, und
    - ausgehend von einer dreidimensionalen Vermaschung des Ziels und einer Schätzung der Pose des Ziels, die Bestimmung (100) einer Einheit von vorstehenden Kanten der Vermaschung des Ziels in der Pose, und

    wobei das Verfahren **dadurch gekennzeichnet ist, dass** der Schritt (100) der Bestimmung der vorstehenden Kanten der Vermaschung des Ziels enthält:

    a) die Positionierung (110) der Vermaschung des Ziels gemäß der Pose,
    b) die zweidimensionale Projektion (130) der so positionierten Vermaschung,
    c) die Abtastung (140) der Projektion der Vermaschung durch eine Vielzahl von Abtastlinien und für jede Abtastlinie:

        - die Definition (141) einer Einheit von Segmenten, wobei jedes Segment der Kreuzung einer Masche der Vermaschung mit der Abtastlinie entspricht und durch seine Enden definiert wird,
        - die Analyse der relativen Tiefen der Enden der Segmente, wobei die Tiefe die Position gemäß einer dritten Dimension orthogonal zu den zwei Dimensionen der Projektion ist, um eine Einheit von Punkten von Enden von Segmenten auszuwählen (142), die vorstehenden Kanten der Vermaschung entsprechen.

2. Verfahren nach Anspruch 1, wobei der Schritt (142) der Analyse der relativen Tiefen der Enden der Segmente für jedes Segmentende einer Abtastlinie enthält:

    - die Bestimmung (1420) der Einheit von überlagerten Segmenten im Bereich des Endes,
    - die Berechnung der Tiefe der Punkte jedes der überlagerten Segmente im Bereich des betreffenden Segmentendes,
    - die Auswahl des Punkts (1421), dessen Tiefe minimal ist,
    - den Vergleich der Tiefe des ausgewählten Punkts mit der Tiefe des letzten sichtbaren Segments im Bereich des ausgewählten Punkts, und
    - im Fall einer Differenz größer als eine bestimmte Schwelle, die Bestimmung des ausgewählten Punkts (1422) als einer vorstehenden Kante der Vermaschung entsprechend.

3. Verfahren nach Anspruch 2, wobei jedes Segment außerdem durch die Normale zu der Masche definiert wird, zu der das Segment gehört, und der Schritt der Analyse der relativen Tiefen der Enden der Segmente außerdem enthält, wenn die Differenz zwischen der Tiefe des ausgewählten Punkts und der Tiefe des letzten sichtbaren Segments im Bereich des ausgewählten Punkts geringer ist als die Schwelle:

    - den Vergleich der Richtung der Normalen zu der Masche, zu der das Segment gehört, auf dem sich der ausgewählte Punkt befindet, mit der Richtung der Normalen zu der Masche, zu der das letzte sichtbare Segment gehört, und
    - im Fall einer Differenz größer als eine bestimmte Schwelle, die Bestimmung des ausgewählten Punkts (1422) als einer vorstehenden Kante der Vermaschung entsprechend.

4. Verfahren nach Anspruch 3, wobei der Schritt der zweidimensionalen Projektion der Vermaschung außerdem die Berechnung der Normalen zu den Seiten der Projektion jeder Masche der Vermaschung enthält.

5. Verfahren nach einem der vorhergehenden Ansprüche, das außerdem, wenn die vorstehenden Kanten der Vermaschung des Ziels bestimmt sind, einen Schritt des Abgleichs (200) der vorstehenden Kanten der Vermaschung des Ziels mit den Kanten des Ziels auf dem Bild enthält.

6. Verfahren nach einem der vorhergehenden Ansprüche, wobei die Einheit der vorstehenden Kanten der Vermaschung des Ziels eine Einheit von Elementen der Vermaschung enthält, wobei jedes Element definiert ist durch:

    - die räumlichen Koordinaten eines Punkts der Vermaschung,
    - die Koordinaten der zweidimensionalen Projektion des Punkts der Vermaschung, der gemäß der Pose positioniert ist, und
    - die Richtung der Normalen der zweidimensionalen Masche der Vermaschung zu dem Punkt.

7. Verfahren nach Anspruch 6 in Kombination mit Anspruch 5, wobei der Schritt des Abgleichs (200) die Überlagerung der zweidimensionalen Projektion der Vermaschung auf das Bild und für jedes Element enthält:

    - die Definition eines Fensters, das sich entlang der Normalen des Elements erstreckt,
- die Erfassung einer Kante in dem Bereich des Bilds entsprechend dem Fenster, und
- die Auswahl eines Pixels des Bilds entsprechend der erfassten Kante als dem Element entsprechend.

8. Verfahren nach einem der Ansprüche 5 bis 7, das außerdem einen Schritt (300) der Aktualisierung der Schätzung der Pose des Ziels auf dem Bild durch Minimierung der Abweichung zwischen den vorstehenden Kanten der Vermaschung des Ziels und den entsprechenden Punkten des Bilds enthält.

9. Verfahren nach Anspruch 8 kombiniert mit Anspruch 6, das außerdem enthält:

   - für jedes Element der Vermaschung, das zur Einheit der vorstehenden Kanten der Vermaschung gehört, die Aktualisierung der Koordinaten der zweidimensionalen Projektion (400) des Punkts der Vermaschung, dann
   - die Wiederholung des Schritts des Abgleichs (200) zwischen den vorstehenden Kanten der Vermaschung und den Kanten des Ziels auf dem Bild.

10. Verfahren nach einem der vorhergehenden Ansprüche, wobei der Schritt der Bestimmung der vorstehenden Kanten der Vermaschung (100) vorab von einem ersten Rechner (31) einer Bodenstation durchgeführt wird.

11. Verfahren nach Anspruch 10, das außerdem die Zuweisung von Gewichtungskoeffizienten zu den Elementen der Einheit der vorstehenden Kanten enthält.

12. Verfahren nach einem der Ansprüche 10 oder 11, das die Bestimmung von Einheiten von vorstehenden Kanten der Vermaschung enthält, die gemäß einer Vielzahl von durch den ersten Rechner (31) vorbestimmten Posen positioniert ist, wobei das Verfahren außerdem die Auswahl einer Einheit von vorstehenden Kanten der Vermaschung gemäß einer der vorbestimmten Posen, die der Pose des Ziels auf dem Bild am meisten entspricht, und die Durchführung des Abgleichschritts (200) an der ausgewählten Einheit enthält.

13. Verfahren nach einem der vorhergehenden Ansprüche, wobei die Vermaschung des Ziels mehrere verschiedene Teile enthält, wobei jeder Punkt der Vermaschung eine Identifikation des Teils der Vermaschung enthält, zu dem er gehört, und die Schritte der zweidimensionalen Projektion der Vermaschung und des Abtastens der Projektion der Vermaschung nur für die Teile der Vermaschung durchgeführt werden, die auf dem Bild vorhandenen Teilen des Ziels entsprechen.

14. Computerprogrammprodukt, das Anweisungen zur Durchführung eines Verfahrens der Bestimmung der vorstehenden Kanten einer Vermaschung eines dreidimensionalen Objekts enthält, das gemäß einer bestimmten Pose positioniert ist, das enthält:

   a) die Positionierung (110) der Vermaschung des Objekts gemäß der Pose,
   b) die zweidimensionale Projektion (130) der so positionierten Vermaschung,
   c) die Abtastung (140) der Projektion der Vermaschung durch eine Vielzahl von Abtastlinien, und für jede Abtastlinie:

   - die Definition (141) einer Einheit von Segmenten, wobei jedes Segment der Kreuzung einer Masche der Vermaschung mit der Abtastlinie entspricht und durch seine Enden definiert ist,
   - die Analyse der relativen Tiefen der Enden der Segmente, wobei die Tiefe die Position gemäß einer dritten Dimension orthogonal zu den zwei Dimensionen der Projektion ist, um eine Einheit von Punkten von Enden von Segmenten entsprechend vorstehenden Kanten der Vermaschung auszuwählen (142),

   wenn es von einem Rechner angewendet wird.

15. System zur Lokalisierung eines dreidimensionalen Ziels bezüglich eines Fahrzeugs, das einen Sensor (10), der geeignet ist, Bilder des Ziels zu erfassen, und eine Kontrolleinheit (20) enthält, die einen Rechner (21) und einen Speicher enthält, wobei das System **dadurch gekennzeichnet ist, dass** es konfiguriert ist, das Verfahren nach einem der Ansprüche 1 bis 14 durchzuführen.


**Claims**

1. Method for locating a three-dimensional target with respect to a vehicle, implemented by a system comprising a sensor (10) suitable for capturing images of the target, and a computer, and comprising:

   - capturing an image of the target, and
   - from a three-dimensional mesh of the target, and from an estimation of the pose of the target, determining (100) a set of projecting edges of the mesh of the target in said pose, and

   the method being **characterized in that** the step (100) of determining the projecting edges of the mesh of the target comprises:

a) positioning (110) the mesh of the target according to the pose,

b) projecting (130) in two dimensions the mesh so positioned,

c) scanning (140) the projection of the mesh in a plurality of scanning rows and, for each scanning row:

- defining (141) a set of segments, each segment corresponding to the intersection of a face of the mesh with the scanning row and being defined by its ends,

- analyzing the relative depths of the ends of the segments, the depth being the position along a third dimension orthogonal to the two dimensions of the projection, in order to select (142) a set of end points of segments corresponding to projecting edges of the mesh.

2. Method according to claim 1, wherein the step (142) of analyzing the relative depths of the ends of the segments comprises, for each segment end of a scanning row:

- determining (1420) the set of superimposed segments at said end,

- calculating the depth of the points of each of the superimposed segments at the segment end considered,

- selecting the point (1421) having the lowest depth,

- comparing the depth of the selected point to the depth of the last visible segment at the selected point, and

- if the difference is greater than a determined threshold, determining that the selected point (1422) corresponds to a projecting edge of the mesh.

3. Method according to claim 2, wherein each segment is further defined by the normal to the face to which the segment belongs,

and the step of analyzing the relative depths of the ends of the segments further comprises, if the difference between the depth of the selected point and the depth of the last visible segment at the selected point is less than said threshold:

- comparing the direction of the normal to the face to which the segment in which the selected point belongs, with the direction of the normal to the face to which the last visible segment belongs, and

- if the difference is greater than a determined threshold, determining that the selected point (1422) corresponds to a projecting edge of the mesh.

4. Method according to claim 3, wherein the step of projecting the mesh in two dimensions further comprises calculating normals to the sides of the projection of each face of the mesh.

5. Method according to one of the preceding claims, further comprising, once the projecting edges of the mesh of the target are determined, a step of mapping (200) the projecting edges of the mesh of the target to edges of the target in the image.

6. Method according to one of the preceding claims, wherein the set of projecting edges of the mesh of the target comprises a set of elements of the mesh, each element being defined by:

- the spatial coordinates of a point of the mesh,
- the coordinates of the two-dimensional projection of said point of the mesh, positioned according to said pose, and
- the direction of the normal of the mesh face in two dimensions at said point.

7. Method according to claim 6 in combination with claim 5, wherein the mapping step (200) comprises superimposing the two-dimensional projection of the mesh on the image, and for each element:

- defining a window extending along the normal of the element,
- detecting an edge in the portion of the image corresponding to the window, and
- selecting a pixel of the image corresponding to the detected edge, as corresponding to the element.

8. Method according to one of claims 5 to 7, further comprising a step (300) of updating the estimation of the pose of the target in the image by minimizing the offset between the projecting edges of the mesh of the target and the corresponding points of the image.

9. Method according to claim 8 combined with claim 6, further comprising:

- for each element of the mesh belonging to the set of projecting edges of the mesh, updating the coordinates of the two-dimensional projection (400) of the point of the mesh, then
- repeating the step of mapping (200) the projecting edges of the mesh to the edges of the target in the image.

10. Method according to one of the preceding claims, wherein the step of determining the projecting edges of the mesh (100) is implemented in a preliminary manner by a first computer (31) of a ground station.

11. Method according to claim 10, further comprising the assignment of weighting coefficients to the elements of the set of projecting edges.

12. Method according to one of claims 10 or 11, comprising determining sets of projecting edges of the mesh positioned in a plurality of predetermined poses by the first computer (31), the method further comprising selecting a set of projecting edges of the mesh in one of the predetermined poses which best matches the pose of the target in the image, and implementing the mapping step (200) on said selected set.

13. Method according to one of the preceding claims, wherein the mesh of the target comprises several distinct parts, each point of the mesh comprising an identification of the part of the mesh to which it belongs, and the steps of projecting the mesh in two dimensions and scanning the projection of the mesh are only implemented for the parts of the mesh corresponding to parts of the target that are present in the image.

14. Computer program product, comprising instructions for implementing a method for determining the projecting edges of a mesh of a three-dimensional object positioned according to a determined pose, comprising:

   a) positioning (110) the mesh of the object according to the pose,
   b) projecting (130) in two dimensions the mesh so positioned,
   c) scanning (140) the projection of the mesh in a plurality of scanning rows and, for each scanning row:

      - defining (141) a set of segments, each segment corresponding to the intersection of a face of the mesh with the scanning row and being defined by its ends,
      - analyzing the relative depths of the ends of the segments, the depth being the position along a third dimension orthogonal to the two dimensions of the projection, in order to select (142) a set of end points of segments corresponding to the projecting edges of the mesh,

   when it is implemented by a computer.

15. System for locating a three-dimensional target with respect to a vehicle, comprising a sensor (10) suitable for capturing images of the target, and a control unit (20) comprising a computer (21) and a memory, the system being **characterized in that** it is configured to implement the method according to one of claims 1 to 14.

**FIG. 1**

FIG. 2a

FIG. 2b

FIG. 4

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ANTOINE PETIT et al.** A robust model-based tracker combining geometrical and color edge information. *2013 IEEE/RSJ International Conférence on Intelligent Robots and Systems,* 03 Novembre 2013
- **ANTOINE PETIT et al.** Vision-based Détection and Tracking for Space Navigation in a Rendezvous Context. *Int. Symp. On Artificial Intelligence, Robotics and Automation in Space, i-SAIRAS,* 11 Novembre 2012
- **J. M. KELSEY et al.** Vision-based Relative Pose Estimation for Autonomous Rendezvous and Docking. *2006 IEEE Aerospace Conférence,* 04 Mars 2006
- **M. WHEELER.** *Automatic Modeling and Localization for Object Recognition,* 25 Octobre 1996
- **N. OUMER.** *Visual Tracking and Motion Estimation for an On-Orbit Servicing of a Satellite,* 01 Mars 2016